Europäisches Patentamt

European Patent Office

Office européen des brevets

(19)

(11) Numero de publication **0 221 818**
A2

(12) **DEMANDE DE BREVET EUROPEEN**

(21) Numéro de dépôt: 86402404.7

(22) Date de dépôt: 28.10.86

(51) Int. Cl.⁴: **F 16 G 3/06**

(30) Priorité: 30.10.85 FR 8516103

(43) Date de publication de la demande:
13.05.87 Bulletin 87/20

(84) Etats contractants désignés:
AT BE CH DE FR GB IT LI LU NL

(71) Demandeur: Caoutchouc Manufacturé et Plastiques Société Anonyme dite:
143, rue Yves-le-Coz B.P. 554
F-78005 Versailles Cedex(FR)

(72) Inventeur: Jaubert, Claude
18, rue de la Meulonnière
F-92500 Rueil Malmaison(FR)

(54) Dispositif d'agrafage pour la jonction des courroies, procédé de jonctionnement utilisant ce dispositif et courroie jonctionnée selon ce procédé.

(57) Dispositif d'agrafage pour la jonction de courroies comportant des éléments de renforcement en textiles synthétiques ou en cables métalliques, caracterise en ce qu'il est consititué de deux plaques latérales (1) comportant chacune, à leur partie supérieure une zone d'extrémité (4) faisant avec le plan de serrage un angle A compris entre 15 et 75°, d'une plaque centrale (2) et de deux noyaux de blocage (12) qui permettent de réaliser une boucle avec les éléments de renforcement dont le revêtement de caoutchouc a été enlevé à l'extrémité de la courroie, lesdits noyaux de blocage (12) agissant par effet de coin entre les zones d'extrémité (4) des plaques latérales (1) et la plaque centrale (2) pour assurer la sécurité de la jonction.

Application aux sangles et courroies et, plus particulièrement, aux courroies transporteuses pour élévateurs.

FIG.4

EP 0 221 818 A2

**0221818**

L'invention concerne les courroies ou les sangles, et, plus particulièrement, les courroies transporteuses élévatrices. Elle est
relative à une méthode et à un dispositif de jonction des extrémités de courroies, soit pour en accroître la longueur, soit pour
réaliser une mise en sans fin par bouclage de la courroie sur
elle-même, qui s'avère fiable en cours de fonctionnement. Le dispositif d'agrafage ainsi que le procédé seront décrits ci-après, à
titre d'exemple, dans l'application à une courroie pour élévateur,
étant entendu qu'ils ne sont pas limités à cet emploi.

Une méthode classique de jonction des extrémités de courroies
consiste en un jonctionnement à chaud, après avoir procédé à une
imbrication des extrémités du matériau de renforcement.

Diverses formes de ces techniques de jonctionnement à chaud sont
décrites dans de nombreux brevets tels que DE 1165354 de Franz
Clouth Rheinische Gummiwarenfabric, FR74.03141 et DE 907996 de
Continental Gummi-Werke, FR 1395634, FR 1582190 et FR 1440605 de
Pneumatiques, Caoutchouc Manufacturé et Plastiques Kléber
Colombes, US 173686 de Goodyear Tire and Rubber. Une méthode est
préconisée dans la norme allemande DIN 22131. Une autre méthode
est décrite, par M.Gozdiff de Goodyear dans une conférence intitulée "Factors relating to vulcanized splice reliability for steel
cable reinforced conveyor belting", présentée au 125ème meeting of
the Rubber Division, American Chemical Society, à Indianapolis, du
8 au 11 mai 1984. Enfin, un article de H.P.Lachmann intitulé "A
survey of present-day conveyor belt technology", publié dans "Bulk
solids handling", volume 4, numéro 4, de décembre 1984 fait le
point des différentes technologies utilisables.

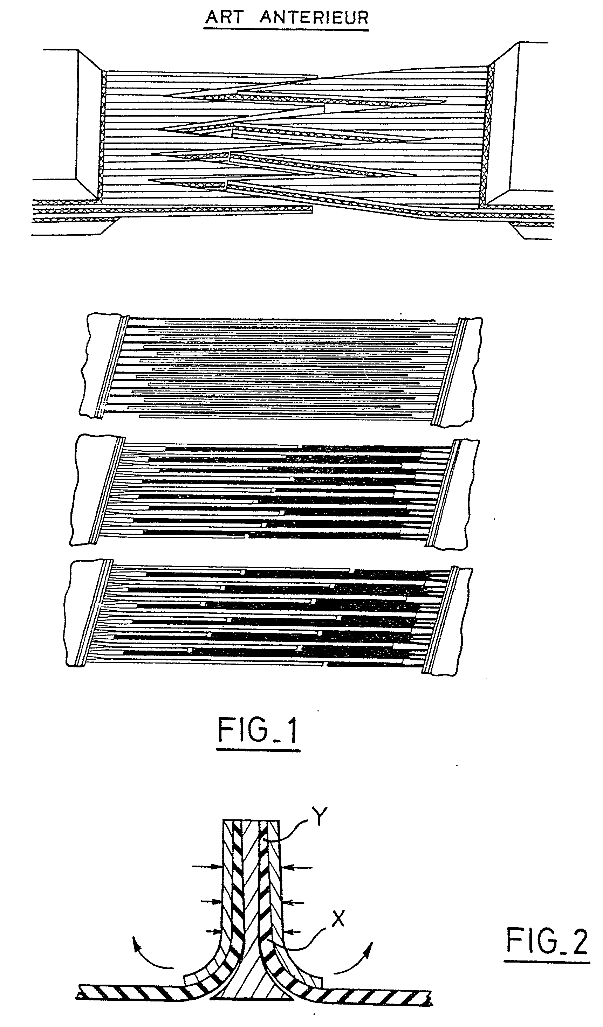

Des exemples sont illustrés sur la figure 1, relative à l'art antérieur dans le jonctionnement à chaud. Il existe cependant, des
conditions qui rendent inapplicables les techniques de jonctionnement à chaud : par exemple, la longueur d'une telle jonction
peut être incompatible avec la place disponible dans la gaine ou
à côté de l'élévateur, ou encore la résistance mécanique peut devenir insuffisante pour garantir un fonctionnement sans incident

**0221818**

de l'élévateur, si la température des produits transportés ou celle des gaz qui circulent dans la gaine dépasse 80 à 100 °C.

En effet, dans le cas d'une imbrication des cables métalliques, la liaison entre les deux extrêmités de courroie(s) est assurée par le mélange de caoutchouc séparant les extrêmités des cables. Or, il est connu que lorsque la température croît, les propriétés mécaniques des mélanges à base d'élastomères diminuent et il en est de même des forces de liaison entre le caoutchouc et le métal ; en conséquence, la résistance à la traction d'une telle jonction décroit lorsque la température s'élève.

Compte tenu des risques encourus avec une jonction par collage à chaud et imbrication des cables métalliques, les techniciens de la manutention ont proposé de remplacer la liaison par collage par une liaison mécanique visant à serrer l'une contre l'autre les deux extrêmités de courroie(s). Ces techniques sont désignées par le terme "d'agrafage" et sont décrites, par exemple, dans le brevet FR 1320222 de Pneumatiques, Caoutchouc Manufacturé et Plastiques Kléber Colombes ou dans les publicités des sociétés spécialisées telles que Goro ou Flexco.

L'effort de compression est assuré par des joues métalliques que traversent des boulons de serrage. Le principe appliqué dans la jonction des extrêmités de courroie(s) par voie mécanique est théoriquement plus satisfaisant que le fonctionnement par collage à chaud mais l'analyse des phénomènes qui accompagnent la mise en service de ce type de dispositifs démontre que la sécurité de fonctionnement n'est que peu améliorée. En effet, sous l'effort de traction exercé sur les deux extrêmités de la courroie, les plaques latérales ont tendance à s'écarter l'une de l'autre. Pour remédier à ce défaut, on utilise, généralement, deux lignes de boulons pour assurer le serrage des plaques, la ligne de boulons placée le plus près de la zone de tension étant destinée à limiter le déplacement des plaques.

La figure 2, relative à l'art antérieur dans la technique d'agrafage, permet d'expliquer les modifications qui interviennent, en fonctionnement, au niveau de la répartition de la pression sur les extrémités de la courroie.

Lors du serrage initial du dispositif d'agrafage, la pression est répartie uniformément sur l'ensemble des deux extrémités serrées.

A la mise en service, il se produit un déplacement des pièces latérales qui tend à diminuer la pression dans la zone X et à l'augmenter dans la zone Y. Sous l'effet de l'accroissement de pression, le mélange de caoutchouc qui se trouve dans la zone Y a tendance à être chassé et flue c'est-à-dire qu'il y a déplacement du caoutchouc des zones les plus comprimées vers les zones les moins comprimées. Ce fluage a pour effet de favoriser encore le rapprochement des plaques de serrage dans la zone Y, ce qui accentue le phénomène.

A l'appui de cette analyse, on constate couramment que la seconde ligne de boulons est totalement desserrée ce qui prouve que l'effort de pression exercé sur les extrémités de courroie(s) n'est pas dû aux boulons mais à un mouvement de rotation des plaques de serrage. Comme dans la zone X, l'effort de serrage a notablement baissé, la tenue d'une telle agrafe n'est due qu'à la retenue des cables métalliques dans la zone Y et aux forces de frottement existant dans la zone X entre la courroie et chacune des plaques de serrage. Après desserrage de la zone Y, l'examen des extrémités de courroie(s) dans ladite zone montre que l'effort de tension est tel qu'il y a destruction locale du mélange caoutchouc et de la liaison entre le caoutchouc et les cables métalliques. De ce fait, la tenue d'une telle agrafe devient très problèmatique surtout lorsque vient s'ajouter à cet effet mécanique celui de la température. Il est, en effet, bien connu que l'augmentation de température accélère et facilite le fluage des mélanges à base d'élastomères et diminue la force de la liaison entre lesdits mélanges et les cables d'acier.

Pour pallier ce défaut, on peut essayer de renforcer la pression exercée par les plaques latérales par un blocage des extrémités des cables métalliques.

Le brevet DE 2341992 de Bernhard Beumer Maschinenfabrik décrit une telle solution, dans laquelle chaque cable métallique est dénudé à son extrémité de son enrobage de caoutchouc et ladite extrémité est insérée dans un dispositif de serrage par vis. Une telle technique, longue et délicate à mettre en oeuvre, présente, en outre, un risque du fait de la conception de la zone de serrage du cable. En effet, si la pression de serrage n'est pas contrôlée, il existe un risque certain de couper le cable, ce qui réduirait à néant l'effet escompté. De plus, sous l'effet des vibrations et de la température, les vis ont tendance à se desserrer et nécessitent donc une surveillance constante.

Une solution différente, utilisée notamment pour assurer le blocage des cables de prétension des structures précontraintes, consiste à dénuder les extrémités des cables métalliques, à détoronner, c'est à dire à détruire l'enroulement des brins constitutifs, pour en épanouir l'extrémité et à couler, autour, un métal à bas point de fusion. Cette technique présente une grande fiabilité lorsqu'elle est utilisable : en effet, la coulée du métal en fusion nécessite la mise en position verticale de l'agrafe, ce qui implique, soit que l'on puisse déplacer l'un des tambours de l'élévateur -ce qui n'est pas toujours possible- soit que l'on puisse placer l'agrafe au sommet de l'élévateur, mais la coulée d'un métal en fusion, sur des extrémités de cables métalliques, à une hauteur de plusieurs dizaines de mètres est alors délicate, voire dangereuse. En outre, un tel dispositif est pratiquement indémontable ce qui ne facilite pas les opérations d'entretien de l'élévateur ou de remplacemnet de la courroie.

L'invention a donc pour objet un dispositif d'agrafage et un procédé pour la jonction de courroies, et, plus particulièrement, de courroies pour élévateurs à godets, comportant des éléments de renforcement constitués de cables métalliques ou de textiles synthétiques. L'invention concerne un dispositif d'agrafage constitué de deux plaques latérales comportant à leur partie supérieure une zone d'extrémité faisant un angle avec le plan de serrage, d'une plaque centrale et de deux noyaux de blocage permettant de réaliser une boucle avec les éléments de renforcement dont on a enlevé

**0221818**

le revêtement de caoutchouc à l'extrémité de la courroie et agissant par effet de coin entre les zones d'extrémités desdites plaques latérales et la plaque centrale, pour assurer la sécurité de la jonction. L'invention a également pour objet le procédé utilisant le dispositif décrit et l'application à une courroie transporteuse élévatrice.

L'invention vise à insérer dans le dispositif d'agrafage un élément destiné à permettre la reprise des efforts de tension par les seuls éléments de renforcement sans solliciter la liaison adhésive entre le caoutchouc et l'élément de renforcement et, par conséquent, à réduire considérablement le risque de rupture au niveau de la jonction, par glissement des pièces du dispositif d'agrafage.

Les caractéristiques et variantes de l'invention seront mieux comprises à la lecture de la description ci-après et en se référant aux dessins dans lesquels, après les figures 1 et 2 illustrant l'art antérieur,

- la figure 3 représente le dispositif d'agrafage utilisé pour la réalisation de la jonction ou de la mise en sans fin de la courroie.

- la figure 4 illustre le procédé de jonctionnement utilisant ledit dispositif d'agrafage,

- la figure 5 propose quelques formes particulières du noyau de blocage,

- la figure 6 montre une disposition particulière permettant d'améliorer la qualité de la jonction.

- la figure 7 illustre une amélioration du dispositif permettant une protection contre la pollution.

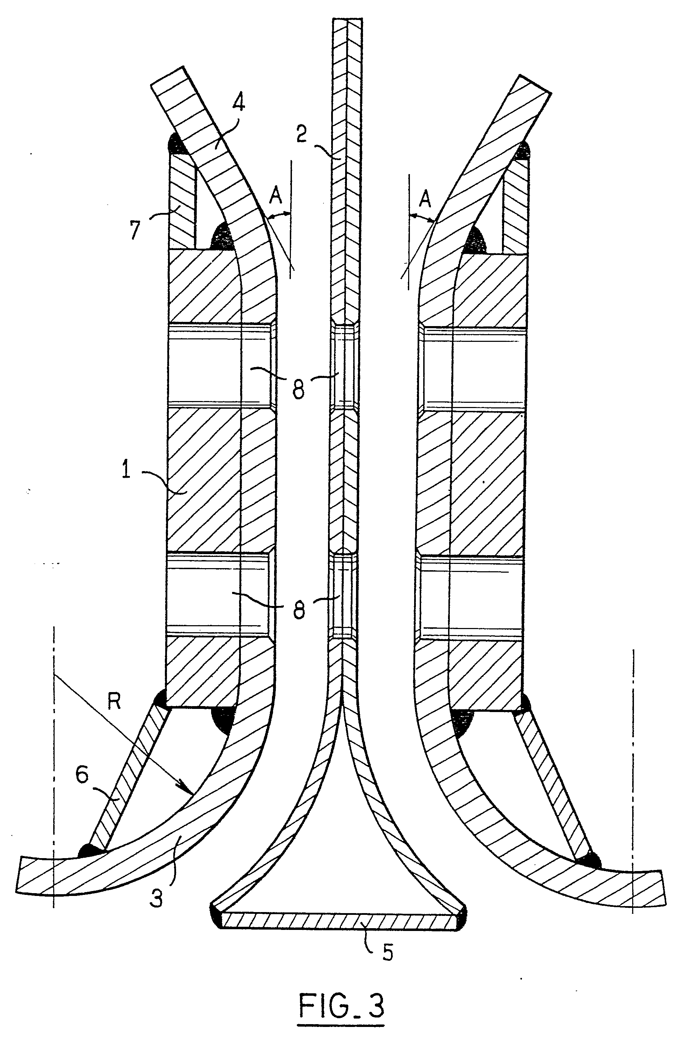

La figure 3 montre que le dispositif d'agrafage est constitué de deux plaques latérales (1) et d'une plaque centrale (2).

0221818

Les plaques latérales (1) comportent deux zones d'extrémités (3) et (4). l'extrémité (3) ayant une forme d'arc de cercle de rayon (R) pour permettre l'enroulement de ladite courroie tendue, sans risque de blessure. l'extrémité (4) étant inclinée d'un angle (A), compris entre 15 et 75°, mais préférentiellement d'une valeur proche de 30°, pour assurer un rendement maximal de l'agrafage, par rapport à l'axe longitudinal du dispositif d'agrafage. Les extrémités (3) et (4) comportent des pièces de renforcement (6) et (7).

Les plaque (2) comportent, à leur base, une partie métallique (5), dont la section a une forme de triangle curviligne, en soi connue. destinée à séparer les deux extrémités de courroie(s) et à éviter, grâce à sa base élargie, que ne se produisent des chocs au moment du passage de la jonction sur les rouleaux ou tambours. Les plaques (1) et (2) sont percées de trous (8) pour le passage des boulons.

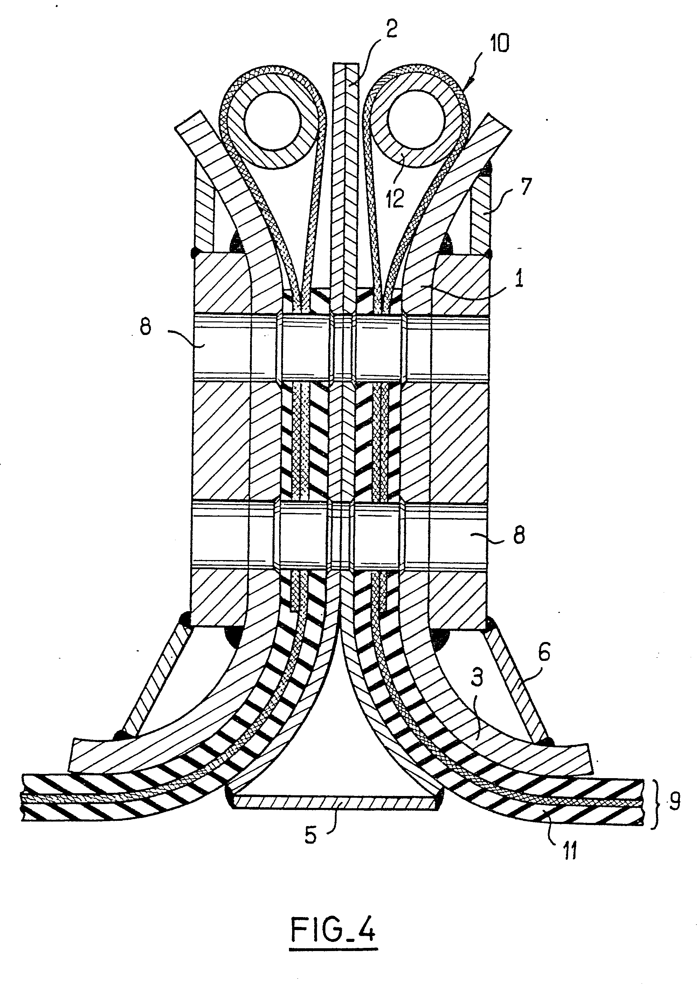

La figure 4 montre comment est réalisé le jonctionnement des extrémités de la courroie (9). Les éléments de renforcement (10) de l'extrémité de ladite courroie sont dénudés de leur enrobage de caoutchouc (11) et sont recourbés autour d'un noyau de blocage (12) puis recollés sur la partie partiellement dénudée de la courroie correspondant à la zone d'agrafage.

Afin d'assurer à ladite zone d'agrafage une épaisseur constante, la longueur des éléments de renforcement dénudés correspond à la longueur de la boucle hors de la partie droite.du dispositif d'agrafage augmentée de la longueur de ladite partie droite du dispositif d'agrafage. La zone de serrage a donc sensiblement la longueur de la partie droite de la plaque centrale (2) du dispositif d'agrafage.

Le montage se fait par pincement des extrémités de courroie(s) ainsi préparées entre les plaques (1) et (2) du dispositif d'agrafage. elles-mêmes serrées par des boulons traversants (non représentés).

Sous l'effet de la traction exercée par la courroie sur ses extrémités, les boucles formées par les éléments de renforcement (10) pénètrent dans les coins formés par la plaque (2) et les extrémités (4) des plaques (1) du dispositif d'agrafage. Les éléments de renforcement se trouvent alors bloqués par la compression exercée par les noyaux de blocage (12). Plus l'effort de traction augmente, plus l'effort de serrage croît, renforçant ainsi la sécurité de la jonction.

Afin que les extrémités de courroie(s) à assembler puissent s'enrouler, sans contraintes excessives, autour des noyaux de blocage (12), lesdits noyaux de blocage doivent posséder un rayon de courbure suffisant. La valeur minimale de ce rayon de courbure n'est pas critique pour une courroie à renforcement textile, qui est assez souple, mais, dans le cas d'utilisation du dispositif d'agrafage avec une courroie dont le renforcement est constitué de cables métalliques, le rayon de courbure (r) du noyau de blocage (12) doit être choisi en fonction du diamètre des cables. Pour un rendement efficace, il doit être égal à au moins 5 fois le diamètre desdits cables et, préférentiellement 8 fois, la valeur supérieure dudit rayon de courbure n'étant limitée que par l'encombrement.

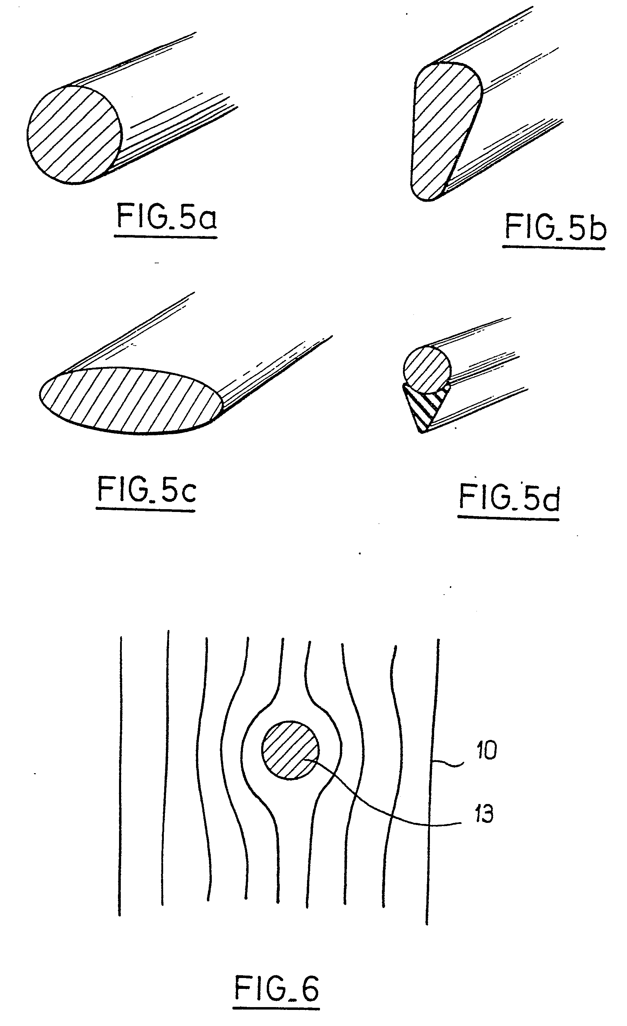

La jonction illustrée en figure 4 utilise des noyaux de blocage (12) cylindriques creux, mais il est bien évident que toute autre forme telles que celles proposées, de manière non limitative, sur la figure 5 conviendraient.

La vue 5a montre un noyau de blocage à section circulaire pleine alors que la vue 5b illustre un noyau de blocage à section triangulaire à angles arrondis, et la vue 5c un noyau à section ovale, la seule condition étant que ces noyaux de blocage puissent venir s'insérer, sous l'effort de traction, entre la plaque (2) et les extrémités (4) des plaques (1) sans blesser les éléments de renforcement. Les noyaux de blocage (12) sont réalisés, le plus souvent en métal, mais ils peuvent être constitués, à titre d'exemple non limitatif, de matériaux composites à matrice rigide ou de caoutchouc renforcé de charges ou de fibres textiles ou métalliques.

0221818

Ils peuvent être également réalisés par une association de plusieurs matériaux, tels qu'une partie métallique et un prolongement en mélange à base de caoutchouc, comme sur la vue 5d. .

Une protection des éléments de renforcement de la courroie, dénudés, contre la corrosion, la pollution par les poussières, les attaques chimiques et l'usure par contact avec les plaques (1) et (2) du dispositif d'agrafage ou avec les noyaux de blocage (12) est assurée par enroulement fin d'une feuille de caoutchouc ou de textile.

Afin d'augmenter l'efficacité de la jonction en limitant le nombre des éléments de renforcement coupés dans la zone de passage des boulons, il est possible, lors du montage, de disposer lesdits éléments de renforcement (10) de manière à ce qu'ils soient déviés de leur trajectoire initiale autour de la tige desdits boulons (13), comme schématisé sur la figure 6. Cette opération est réalisée au moyen d'un outil adapté, par exemple du type à embout conique, bien connu de l'homme de l'art ou par moulage et vulcanisation.

Dans le type de jonction proposé, il est courant de disposer, afin d'augmenter la surface de serrage, deux rangées de boulons qu'il est préférable de placer sur une même ligne et non en quinconce pour limiter le nombre des éléments de renforcement concernés par le passage desdits boulons.

Pour obtenir un effet de coincement par le noyau de blocage (12), l'effort de serrage des boulons doit être suffisant. L'expérience montre qu'un serrage initial de 30 a 50 m.kg pour des boulons de diamètre 20 mm est nécessaire.

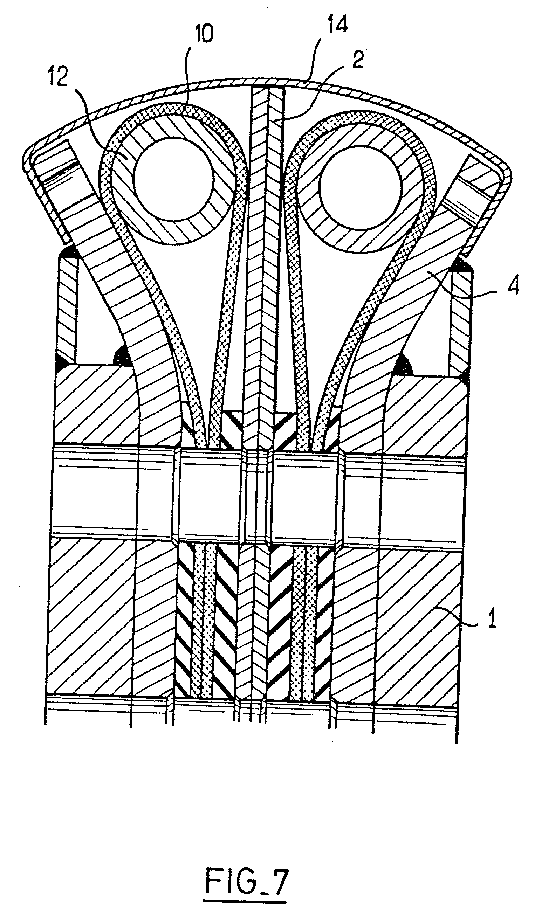

Comme il a été dit précédemment, les éléments de renforcement sont protégés par un revêtement rapporté, mais pour accroître encore cette protection, il est possible, comme l'illustre la figure 7, de disposer, dans la partie supérieure du dispositif d'agrafage, un capot (14), le plus souvent réalisé en tôle, qui vient se fixer, au moyen de vis par exemple, sur les extrémités (4) des plaques (1) du dispositif d'agrafage. L'étanchéité est complétée par la pose d'un mastic ou d'une matière malléable.

0221818

Pour illustrer l'efficacité du dispositif de jonction objet de l'invention. les essais suivants ont été réalisés :
Trois courroies identiques, d'une résistance nominale de 1250 N/mm ont été mises en sans fin :

1) à l'aide d'une agrafe standard du commerce, n'utilisant pas de noyau de blocage et n'agissant donc que par serrage (courroie 1)

2) à l'aide du dispositif d'agrafage objet de l'invention dans lequel le passage des boulons traversants provoque un certain nombre de coupures des éléments de renforcement (courroie 2).

3) à l'aide du dispositif d'agrafage objet de l'invention et en utilisant la technique de déviation des éléments de renforcement schématisée sur la figure 6 (courroie 3).

Les courroies ainsi jonctionnées sont montées sur un banc de mesure de la résistance en traction formé de deux tambours cylindriques à axes parallèles. Par éloignement progressif des deux tambours. la tension exercée sur l'anneau constitué de la courroie mise en sans fin augmente jusqu'à la rupture de la courroie et l'on enregistre la force maximale appliquée.

Le "rendement" de la jonction est défini comme le rapport, en pourcentage. de l'effort maximal enregistré à la résistance nominale de la courroie. selon l'expression :

$$R = 100 \times Fm / Rn$$

dans laquelle - R représente le rendement de la jonction,
- Fm représente l'effort maximal enregistré au cours de l'essai sur le banc de mesure,
- Rn représente la résistance mécanique nominale de la courroie. c'est-à-dire sa résistance à la rupture "en plein corps". dans une zone ne comportant pas de jonction.

Les résultats obtenus sont indiqués dans le tableau ci-après.

| Référence | Type d'agrafage | Rendement |
|-----------|------------------|-----------|
| Courroie 1 | Agrafe du commerce | 51 % |
| Courroie 2 | Agrafage à effet de coin | 68 % |
| Courroie 3 | Agrafage à effet de coin + déviation des éléments de renforcement dans la zone de perçage | 80 % |

Il est ainsi démontré que le système d'agrafage objet de l'invention, qui utilise un noyau de blocage pour provoquer un effet de coin, permet de réaliser une jonction des extrémités de courroie(s) dans des conditions simples, voisines de celles des agrafages conventionnels, dans des conditions de sécurité puisqu'il n'y a aucune nécessité de manipuler du métal en fusion et en rendant la jonction fiable même dans des cas d'utilisation difficiles tels que des températures élevées ou de fortes tensions de service.

L'homme de l'art peut, bien entendu, apporter diverses modifications au dispositif, au procédé et aux applications décrits précédemment et illustrés à titre d'exemples non limitatifs, sans sortir du cadre de l'invention.

REVENDICATIONS

1° Dispositif d'agrafage pour la jonction de courroies et, en particulier, de courroies pour élevateurs à godets, comportant des éléments de renforcement en textiles synthétiques ou en cables métalliques, caractérisé en ce qu'il est consititué de deux plaques latérales (1) comportant chacune, à leur partie supérieure, une zone d'extrémité (4) faisant avec le plan de serrage un angle A compris entre 15 et 75°, d'une plaque centrale (2) et de deux noyaux de blocage (12) qui permettent de réaliser des boucles avec les éléments de renforcement dont le revêtement en caoutchouc a été enlevé aux extrémités de courroie(s), lesdits noyaux de blocage (12) agissant par effet de coin entre les zones d'extrémité (4) des plaques latérales (1) et la plaque centrale (2) pour assurer la sécurité de la jonction.

2° Dispositif d'agrafage pour la jonction de courroies selon la revendication 1, caractérisé en ce que l'angle A de la zone d'extrémité (4) des plaques latérales (1) est compris entre 20 et 35°.

3° Dispositif d'agrafage pour la jonction de courroies selon l'une des revendications 1 ou 2, caractérisé en ce que les noyaux de blocage (12) sont métalliques.

4° Dispositif d'agrafage pour la jonction de courroies selon l'une des revendications 1 ou 2, caractérisé en ce que les noyaux de blocage (12) sont réalisés en matériaux composites à matrice rigide.

5° Dispositif d'agrafage pour la jonction de courroies selon l'une des revendications 1 ou 2, caractérisé en ce que les noyaux de blocage (12) sont réalisés dans un mélange à base de caoutchouc renforcé par des charges ou des fibres textiles ou métalliques.

6° Dispositif d'agrafage pour la jonction de courroies selon l'une des revendications 1 ou 2, caractérisé en ce que le noyau est constitué d'au moins deux matières telles qu'un matériau rigide pour la partie en contact avec les éléments de renforcement et un matériau à base de caoutchouc pour la partie en contact avec le coin formé par les zones d'extrémité (4) des plaques latérales (1) et la plaque centale (2).

7° Dispositif d'agrafage pour la jonction de courroies selon l'une des revendications 1 à 6, caractérisé en ce que, dans le cas d'une utilisation avec des courroies renforcées de cables métalliques, le rayon de courbure r de la partie du noyau de blocage (12) en contact avec le cable métallique est au moins égal à 5 fois le diamètre dudit cable.

8° Dispositif d'agrafage pour la jonction de courroies selon l'une des revendications 1 à 7, caractérisé en ce qu'un capot de protection (13) contre la pollution et les intempéries est fixé à la partie supérieure dudit dispositif et rendu étanche par l'emploi d'un mastic.

9° Procédé de jonction par agrafage de courroies caractérisé en ce que les extrémités des éléments de renforcement (10), dénudées de leur revêtement de caoutchouc, sont collées sur les parties - également partiellement dénudées des éléments de renforcement - situées dans la zone de serrage entre les plaques (1) et (2) du dispositif d'agrafage conforme à l'une des revendications 1 à 8.

10° Procédé de jonction par agrafage de courroies selon la revendication 9, caractérisé en ce que la longueur de serrage dans le dispositif d'agrafage est égale à la longueur droite de la plaque centrale (2) dudit dispositif.

11° Procédé de jonction par agrafage de courroies selon l'une des revendications 9 ou 10, caractérisé en ce que les éléments de renforcement (10) au voisinage des boulons de fixation des différentes parties (1) et (2) du dispositif d'agrafage sont déviés de leur trajectoire initiale pour ne pas être coupés par les boulons traversants.

12° Courroie transporteuse pour élévateur à godets caractérisée en ce que sa jonction ou sa mise en sans fin est réalisée selon l'une des revendications 9 à 11 et en utilisant le dispositif d'agrafage conforme à l'une des revendications 1 à 8.

ART ANTERIEUR

FIG_1

FIG_2

FIG. 3

FIG_4

FIG.5a

FIG.5b

FIG.5c

FIG.5d

10

13

FIG.6

FIG_7